(19) **Europäisches Patentamt European Patent Office Office européen des brevets**

(11) **EP 3 415 475 A1**

(12) **DEMANDE DE BREVET EUROPEEN**

(43) Date de publication:
**19.12.2018 Bulletin 2018/51**

(21) Numéro de dépôt: **18174640.5**

(22) Date de dépôt: **04.12.2008**

(51) Int Cl.:
C03C 25/24 (2018.01)   C03C 25/26 (2018.01)
C03C 25/32 (2018.01)   D04H 1/64 (2012.01)
C09J 101/00 (2006.01)   C09J 103/00 (2006.01)
C08G 63/20 (2006.01)   C08G 63/668 (2006.01)
C08K 5/092 (2006.01)   C08K 5/151 (2006.01)
C08K 7/14 (2006.01)   C09J 167/00 (2006.01)
E04B 1/74 (2006.01)   D04H 1/645 (2012.01)
D04H 1/587 (2012.01)   D04H 1/4218 (2012.01)
D04H 1/4209 (2012.01)   C08K 3/32 (2006.01)

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **05.12.2007 FR 0759580**

(62) Numéro(s) de document de la (des) demande(s) initiale(s) en application de l'article 76 CBE:
**08863743.4 / 2 231 543**

(71) Demandeur: **Saint-Gobain Isover 92400 Courbevoie (FR)**

(72) Inventeurs:
• **JAFFRENNOU, Boris 75019 PARIS (FR)**
• **SERUGHETTI, Dominique 75014 PARIS (FR)**
• **DOUCE, Jérôme 69003 LYON (FR)**

(74) Mandataire: **Saint-Gobain Recherche Département Propriété Industrielle 39 Quai Lucien Lefranc 93300 Aubervilliers (FR)**

Remarques:
Cette demande a été déposée le 28-05-2018 comme demande divisionnaire de la demande mentionnée sous le code INID 62.

(54) **COMPOSITION D'ENCOLLAGE POUR LAINE MINERALE COMPRENANT UN MONOSACCHARIDE ET/OU UN POLYSACCHARIDE ET UN ACIDE ORGANIQUE POLYCARBOXYLIQUE, ET PRODUITS ISOLANTS OBTENUS**

(57) La présente invention se rapporte à une composition d'encollage pour des produits isolants à base de laine minérale, notamment de verre ou de roche, qui comprend
- au moins un monosaccharide et/ou au moins un polysaccharide, et
- au moins un acide organique polycarboxylique ayant une masse molaire inférieure ou égale à 1000.

Elle a également pour objet les produits isolants à base de fibres minérales obtenus et leur procédé de fabrication.

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler pour former ledit liant organique, qui renferme au moins un monosaccharide et/ou un polysaccharide et au moins un acide organique polycarboxylique ayant une masse molaire inférieure à 1000, le procédé de préparation de ladite composition d'encollage, et les produits isolants qui en résultent.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe. La centrifugation consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, pour éviter la formation de chaînes longues, peu hydrosolubles, qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée, à son tour dégradée au moins partiellement en ammoniac, qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un polymère d'acide carboxylique, notamment d'acide acrylique.

Dans US 5 340 868, l'encollage comprend un polymère polycarboxylique, un β-hydroxylamide et un acide carboxylique monomérique au moins trifonctionnel.

Il a été proposé des compositions d'encollage comprenant un polymère polycarboxylique, un polyol et un catalyseur, lequel catalyseur est un catalyseur contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Dans US 2002/0091185, le polymère polycarboxylique et le polyol sont utilisées en quantités telles que le rapport du nombre d'équivalents de groupes OH au nombre d'équivalents de groupes COOH varie de 0,6/1 à 0,8/1.

Dans US 2002/0188055, la composition d'encollage comprend un polymère polycarboxylique, un polyol et un tensioactif cationique, amphotère ou non ionique.

Dans US 2004/0002567, la composition d'encollage renferme un polymère polycarboxylique, un polyol et un agent de couplage de type silane.

Dans US 2005/0215153, il est décrit un encollage formé à partir d'un pré-liant contenant polymère d'acide carboxylique et d'un polyol, et d'une dextrine en tant que co-liant.

Par ailleurs, on connaît une composition adhésive à base de polysaccharides thermoréticulables qui peut être utilisée en tant qu'encollage pour de la laine minérale (US 5 895 804). La composition comprend un polymère polycarboxylique ayant au moins deux groupes fonctionnels acide carboxylique et un poids moléculaire au moins égal à 1000, et un polysaccharide ayant un poids moléculaire au moins égal à 10000.

La présente invention a pour but de proposer une composition d'encollage pour des produits isolants à base de laine minérale qui est exempte de formaldéhyde, permettant ainsi de disposer d'une alternative aux compositions d'encollage à base de résols.

Un autre but est de fournir une composition d'encollage élaborée à partir de composés naturels issus de sources renouvelables, notamment végétales, ou produits par fermentation microbienne.

Pour atteindre ces buts, la présente invention propose une composition d'encollage pour des produits isolants à base de laine minérale, notamment de verre ou de roche, qui comprend

- au moins un monosaccharide et/ou au moins un polysaccharide, et
- au moins un acide organique polycarboxylique ayant une masse molaire inférieure ou égale à 1000.

Le monosaccharide est choisi parmi les monosaccharides renfermant 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que glucose, le mannose et le galactose.

Le polysaccharide conforme à l'invention est choisi parmi les polysaccharides ayant une masse molaire moyenne en poids inférieure à 100000, de préférence inférieure à 50000, avantageusement inférieure à 10000, et mieux encore supérieure à 180.

De manière avantageuse, le polysaccharide présente un indice de polydispersité (IP) défini par le rapport de la masse molaire moyenne en poids à la masse molaire moyenne en nombre qui est inférieur ou égal à 10.

De préférence, le polysaccharide renferme au moins un motif choisi parmi les aldoses précités, avantageusement le glucose. Sont particulièrement préférés les polysaccharides qui sont constitués majoritairement (à plus de 50 % en poids) de motifs de glucose.

Selon un mode de réalisation préféré, l'invention utilise un mélange de monosaccharide(s) et/ou de polysaccharide(s), notamment obtenus à partir de végétaux, en particulier une dextrine ou une mélasse.

Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

On préfère en particulier les dextrines ayant un équivalent en dextrose DE (« Dextrose Equivalent » en anglais) supérieur ou égal à 5, de préférence supérieur ou égal à 10, avantageusement supérieur ou égal à 15, et mieux encore inférieur à 100.

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Les mélasses sont des résidus de raffinage de sucre extrait notamment de la canne et de la betterave qui contiennent une forte teneur en glucides, de l'ordre de 40 à 60 % en poids. L'essentiel des glucides de la mélasse est constitué par du saccharose.

Les mélasses conformes à l'invention renferment de préférence de 45 à 50 % en poids de glucides totaux, exprimés en saccharose.

Les mélasses de betterave sont particulièrement préférées.

Par « acide organique polycarboxylique », on entend un acide organique comprenant au moins deux fonctions carboxyliques, de préférence au plus 4, et avantageusement au plus 3 fonctions carboxyliques.

L'acide organique polycarboxylique joue le rôle d'agent de réticulation ; il est apte à réagir avec le(s) monosaccharide(s) et/ou le(s) polysaccharide(s) sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'acide organique polycarboxylique est choisi parmi les acides organiques polycarboxyliques présentant une masse molaire inférieure ou égale à 1000, de préférence inférieure ou égale à 750 et avantageusement inférieure ou égale à 500.

De préférence, l'acide organique polycarboxylique est un acide alicyclique, ramifié ou non, saturé ou insaturé, un acide cyclique ou un acide aromatique.

L'acide organique polycarboxylique peut être un acide dicarboxylique, par exemple l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique, ou un précurseur d'acide dicarboxylique, notamment un anhydride tel que l'anhydride maléique, l'anhydride succinique et l'anhydride phtalique; un acide tricarboxylique, par exemple l'acide citrique, l'acide tricarballylique, l'acide 1,2,4-butanetricarboxylique, l'acide aconitique, l'acide hémimellitique, l'acide trimellitique et l'acide trimésique ; un acide tétracarboxylique, par exemple l'acide 1,2,3,4-butanetétracarboxylique et l'acide pyroméllitique.

Dans la composition d'encollage, le monosaccharide et/ou le polysaccharide représente 10 à 90 % du poids du mélange constitué par monosaccharide et/ou le polysaccharide et l'acide organique polycarboxylique, de préférence 20 à 85 %, et avantageusement 30 à 80 %.

La composition d'encollage peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium et les mélanges de ces composés.

La quantité de catalyseur introduite dans la composition d'encollage peut représenter jusqu'à 20 % du poids du monosaccharide et/ou du polysaccharide et de l'acide organique polycarboxylique, de préférence jusqu'à 10 %, et avantageusement est au moins égale à 1 %.

La composition d'encollage conforme à l'invention peut comprendre en outre les additifs conventionnels ci-après dans les proportions suivantes calculées sur la base de 100 parts en poids de monosaccharide(s) et/ou de polysaccharide(s) et d'acide organique polycarboxylique :

- 0 à 2 parts de silane, en particulier un aminosilane,
- 0 à 20 parts d'huile, de préférence 4 à 15 parts,
- 0 à 30 parts d'urée et/ou de glycérol, de préférence 0 à 20 parts,
- 0 à 5 parts d'un silicone,
- 0 à 30 parts d'un « extendeur » choisi parmi les dérivés de la lignine tel que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée et le glycérol jouent le rôle de plastifiants et permettent d'éviter la prégélification de la composition d'encollage ; le silicone est un agent hydrophobe qui a pour fonction de réduire l'absorption d'eau par le produit d'isolation ; l'« extendeur » est une charge organique soluble ou dispersable dans la composition d'encollage aqueuse qui permet notamment de diminuer le coût de la composition d'encollage.

La composition d'encollage présente un pH acide, de l'ordre de 1 à 5 selon l'acide organique polycarboxylique utilisé, de préférence supérieur ou égal à 1,5. Avantageusement, le pH est maintenu à une valeur au moins égale à 2, de manière à limiter les problèmes d'instabilité de la composition d'encollage et de corrosion de la ligne de fabrication, grâce à l'ajout d'un composé aminé qui n'est pas apte à réagir avec le monosaccharide et/ou le polysaccharide, par exemple une amine tertiaire, notamment la triéthanolamine. La quantité de composé aminé peut représenter jusqu'à 30 parts en poids du poids total de monosaccharide et/ou du polysaccharide et d'acide organique polycarboxylique.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

Dans ces exemples, on mesure :

- la masse molaire en poids et la masse molaire en nombre des dextrines par chromatographie par perméation de gel dans les conditions suivantes :

  ➢ trois colonnes disposées en série : deux colonnes ViscoGEL® remplies de GMPWxl (colonnes à « lit mixte ») et une colonne ViscoGEL® remplie de G2500PWxl (colonne à « lit simple »). Ces colonnes sont commercialisées par la société VISCOTEK
  ➢ éluant : tampon PBS (solution saline à base de phosphate et de chlorure de sodium à pH 7,4 environ)
  ➢ température : 35°C
  ➢ détecteurs : réfractométrie différentielle, viscosimétrie et diffusion de la lumière.

- la température de début de réticulation ($T_R$) et la vitesse de réticulation (V) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 40 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E. L'échantillon est chauffé à une température variant de 20 à 250°C à la vitesse de 4°C/min. A partir des mesures, on établit la courbe de variation du module d'élasticité E (en MPa) en fonction de la température (en °C) dont l'allure générale est donnée dans la Figure 1. On détermine sur la courbe les valeurs correspondant à la température de début de réticulation ($T_R$), en °C, et la pente correspondant à la vitesse de réticulation (V) en MPa/°C.

Figure 1

- l'angle de contact de la composition d'encollage, sur un support en verre.
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en gramme-force) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).

- l'épaisseur initiale du produit d'isolation et l'épaisseur après 1 heure, 24 heures, 30 jours et 90 jours sous compression avec un taux de compression (défini comme étant le rapport de l'épaisseur nominale à l'épaisseur sous compression) égal à 6/1 (exemples 22 à 24) ou 5/1 (exemples 25 à 34). Les mesures d'épaisseur permettent d'évaluer la bonne tenue dimensionnelle du produit.
- l'absorption d'eau dans les conditions de la norme EN 1609, exprimée en kg d'eau absorbée par $m^2$ de produit isolant. Les produits d'isolation présentant une absorption d'eau inférieure à 1 kg/$m^2$ sont considérés comme ayant une faible absorption d'eau à court terme (24 heures) ; ils appartiennent à la classe « WS » selon la certification ACERMI.
- la résistance au feu mesurée selon la norme EN ISO 1182. Les produits appartenant à la classe « Euroclass A1 » ne contribuent pas à la déclaration et à la propagation du feu.
- le coefficient de conductivité thermique $\lambda$ selon la norme EN 13162, exprimé en W/(m x °K).
- la quantité de formaldéhyde émis par le produit après 3 jours de test dans les conditions de la norme ISO 16000-9 et avec un rapport entre le changement d'air et le taux de charge de la chambre Q égal à 0,4. La quantité de formaldéhyde est mesurée selon la méthode décrite dans la norme ISO 16000-3. Les résultats sont exprimés en $\mu$g de formaldéhyde émis par $m^2$ et par heure.

## EXEMPLES 1 A 6

On prépare des compositions d'encollage comprenant les constituants figurant dans le tableau 1 exprimé en parts pondérales.

La mélasse est une mélasse de betterave à usage industriel (commercialisée par FRANCE MELASSES) qui se présente sous la forme d'un liquide visqueux et homogène contenant 43 à 53 % en poids de sucres, exprimés en saccharose.

Les compositions d'encollage sont préparées en introduisant successivement, dans un récipient contenant de l'eau, la mélasse, l'acide citrique et l'hypophosphite de sodium (catalyseur) sous une agitation vigoureuse jusqu'à dissolution complète des constituants.

Les propriétés des compositions d'encollage figurant dans le tableau 1 sont évaluées comparativement à une composition d'encollage classique renfermant une résine formophénolique et de l'urée (Référence) préparée conformément à l'exemple 2, essai 1 de WO 01/96254 A1.

Les compositions d'encollage des exemples 1 à 6 ont des propriétés similaires à celles de la Référence en termes de température de début de réticulation ($T_R$), de viscosité et d'angle de contact. La vitesse de réticulation (V) demeure plus faible que celle de la Référence.

## EXEMPLES 7 A 21

On procède dans les conditions des exemples 1 à 6 modifiées en ce que l'on utilise une dextrine issue d'amidon de maïs (maltodextrine) ayant les caractéristiques suivantes :

- une masse molaire moyenne en poids égale à 5500, un indice de polydispersité IP égal à 9,5 et un équivalent en dextrose DE compris entre 16,5 et 19,5 (commercialisée sous la référence 419699 par ALDRICH ; extrait sec : 100 %) : exemples 7 à 12,
- une masse molaire moyenne en poids égale à 1850, un indice de polydispersité IP égal à 4,45 et un équivalent en dextrose DE égal à 30 (commercialisée sous la référence Tackidex® 30L75 par ROQUETTE FRERES ; extrait sec : 75 %) : exemples 13 à 15,
- une masse molaire moyenne en poids égale à 1520, un indice de polydispersité IP égal à 5,72 et un équivalent en dextrose DE égal à 62 (commercialisée sous la référence Flolys® B6080S par ROQUETTE FRERES ; extrait sec : 81 %) : exemples 16 à 18,
- une teneur massique en glucose supérieure à 95 % et un équivalent en dextrose DE égal à 99 (commercialisée sous la référence sirop de glucose 74/968® par ROQUETTE FRERES ; extrait sec : 75 %) : exemples 19 à 21.

La teneur des constituants des compositions d'encollage est donnée dans le tableau 2, en parts pondérales.

Les compositions d'encollage des exemples 8 à 15, 18 et 21 présentent avantageusement une température de début de réticulation ($T_R$) inférieure à celle de la Référence. La présence du catalyseur dans la composition de l'exemple 9 permet de diminuer significativement la température de début de réticulation comparativement à la composition de l'exemple 7, avec toutefois une diminution de la vitesse de réticulation (V).

Les compositions d'encollage selon l'invention présentent une faible viscosité, proche de celle de la Référence pour une même teneur en matières solides (40 %), voire inférieure, ce qui autorise une bonne application sur les fibres minérales, notamment lorsque celle-ci est effectuée par pulvérisation.

Ces compositions présentent aussi un angle de contact similaire à celui de la Référence qui dénote une bonne aptitude au mouillage des fibres par la composition d'encollage.

## EXEMPLES 22 A 24

Les compositions des exemples 2, 4 et 10, ainsi que la résine formophénolique (Référence) sont utilisées pour former des produits d'isolation à base de laine de verre.

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le feutre ou la nappe est découpé, puis placé dans une étuve maintenue à 220°C où les constituants de l'encollage polymérisent pour former un liant.

Le tableau 3 rassemble les valeurs de la résistance en traction avant et après vieillissement, ainsi que l'épaisseur initiale et la reprise d'épaisseur après 24 heures et 30 jours de compression.

**EXEMPLES 25 A 34**

Ces exemples illustrent la fabrication de produits isolants dans une ligne industrielle.

La laine minérale est produite en continu dans les conditions des exemples 22 à 24, sur une ligne de 2,40 m de large. La laine minérale revêtue de la composition d'encollage passe ensuite en continu dans une étuve à 290°C.

Le produit d'isolation obtenu à la sortie de l'étuve présente une épaisseur de l'ordre de 82 mm, une densité égale à 17,5 kg/m$^3$ et une perte au feu égale à 5 %.

Les compositions d'encollage utilisées sont préparées en introduisant les constituants du tableau 4 dans un récipient contenant de l'eau, sous agitation.

Les propriétés des produits d'isolation sont évaluées comparativement à la composition d'encollage de référence (notée Réf.) décrite dans les exemples 1 à 6. Les mesures figurent dans le tableau 4.

Tableau 1

|  | Ex. 1 | Ex. 2 | Ex. 3 | Ex. 4 | Ex. 5 | Ex. 6 | Réf. |
|---|---|---|---|---|---|---|---|
| **Composition** |  |  |  |  |  |  |  |
| Mélasse | 30 | 40 | 50 | 60 | 70 | 80 | - |
| Acide citrique | 70 | 60 | 50 | 40 | 30 | 20 | - |
| Hypophosphite de sodium | 5 | 5 | 5 | 5 | 5 | 5 | - |
| **Propriétés** |  |  |  |  |  |  |  |
| Température de début de réticulation $T_R$(°C) | 151 | 149 | 149 | 155 | 156 | 156 | 151 |
| Vitesse de réticulation V (MPa/°C) | 58 | 69 | 65 | 59 | 40 | 41 | 161 |
| Viscosité à 25°C (mPa.s) [1] | 7,8 | 7,8 | 8,0 | 7,8 | 7,2 | 7,5 | 8,0 |
| Viscosité à 50°C (mPa.s) [1] | 5,9 | 6,0 | 5,9 | 6,1 | 5,8 | 6,0 | 6,0 |
| Angle de contact (°) [1] | 4 | 6 | 8 | 12 | 11 | 12 | 10 |
| [1] solution à 40 % de matières solides | | | | | | | |

Tableau 2

| Exemple | 7 | 8 | 9 | 10 | 11 | 12 | 13 | 14 | 15 | 16 | 17 | 18 | 19 | 20 | 21 | Réf. |
|---|---|---|---|---|---|---|---|---|---|---|---|---|---|---|---|---|
| **Composition** | | | | | | | | | | | | | | | | |
| Dextrine | | | | | | | | | | | | | | | | |
| 419699 | 40 | 30 | 40 | 50 | 60 | 70 | - | - | - | - | - | - | - | - | - | - |
| Tackidex 30L75 | - | - | - | - | - | - | 80 | 70 | 60 | - | - | - | - | - | - | - |
| Flolys | - | - | - | - | - | - | - | - | - | 80 | 70 | 60 | - | - | - | - |
| Sirop de glucose 74/968 | - | - | - | - | - | - | - | - | - | - | - | - | 80 | 70 | 60 | - |
| Acide citrique | 60 | 70 | 60 | 50 | 40 | 30 | 20 | 30 | 40 | 20 | 30 | 40 | 20 | 30 | 40 | - |
| Hypophosphite de sodium | 0 | 5 | 5 | 5 | 5 | 5 | 5 | 5 | 5 | 5 | 5 | 5 | 5 | 5 | 5 | - |
| **Propriétés** | | | | | | | | | | | | | | | | |
| Temp. début réticulation $T_R$ (°C) | 171 | 144 | 132 | 131 | 132 | 130 | 120 | 120 | 120 | 152 | 151 | 120 | 165 | 151 | 135 | 151 |
| Vitesse réticulation V (MPa/°C) | 105 | 62 | 63 | 67 | 72 | 76 | 27 | 45 | 57 | 42 | 48 | 46 | 67 | 42 | 32 | 161 |
| Viscosité à 25°C (mPa.s) [1] | 9,3 | 9,4 | 10,0 | 11,0 | 12,0 | 12,0 | 7,4 | 7,0 | 7,0 | 6,6 | 6,4 | 6,0 | 6,2 | 5,9 | 5,5 | 8,0 |
| Viscosité à 50°C (mPa.s) [1] | 6,8 | 7,1 | 7,6 | 7,9 | 9,3 | 8,6 | 5,3 | 5,0 | 5,1 | 5,2 | 5,4 | 5,0 | 5,0 | 4,7 | 4,6 | 6,0 |
| Angle de contact (°) [1] | 6,0 | 6,0 | 6,0 | 8,0 | 8,0 | 12,0 | 5,7 | 5,9 | 6,0 | 11,9 | 11,0 | 10,8 | 9,5 | 9,0 | 8,1 | 10,0 |

[1] solution à 40 % de matières solides

Tableau 3

|  | Ex. 22 | Ex. 23 | Ex. 24 | Réf. |
|---|---|---|---|---|
| **Composition d'encollage** | Ex. 2 | Ex. 4 | Ex. 10 | Réf. |
| **Résistance en traction** | | | | |
|   Avant vieillissement | 298 | 260 | 226 | 336 |
|   Après vieillissement | 220 | 175 | 180 | 280 |
|   Perte (%) | 26,2 | 32,7 | 20,3 | 16,7 |
| **Epaisseur (mm)** | | | | |
|   Initiale | 134 | 134 | 143 | 127 |
|   24 heures | 89 | 90 | 94 | 102 |
|   30 jours | 81 | 80 | 91 | 98 |

Tableau 4

| Exemple | 25 | 26 | 27 | 28 | 29 | 30 | 31 | 32 | 33 | 34 | Réf. |
|---|---|---|---|---|---|---|---|---|---|---|---|
| **Composition d'encollage** | | | | | | | | | | | |
| Sirop de glucose 74/968 | 49,0 | 49,0 | 49,0 | 64,0 | 34,3 | 34,3 | - | - | - | - | - |
| Tackidex 30L75 | - | - | - | - | - | - | - | - | - | - | - |
| Roclys C3072S[(2)] | - | - | - | - | - | - | 55,0 - | 55,0 - | 62,0 | 39,2 | - |
| Acide citrique | 51,0 | 51,0 | 51,0 | 36,0 | 47,2 | 47,2 | 45,0 | 45,0 | 38,0 | 43,6 | - |
| Hypophosphite de sodium | 5,0 | 2,8 | 2,8 | 5,0 | 5,0 | 5,0 | 2,8 | 2,8 | 5,0 | 5,0 | - |
| Glycérol | - | - | 10 | - | - | - | - | 10,0 | - | 5,0 | - |
| $\gamma$-aminopropyltriéthoxysilane | 1,0 | 1,0 | 1,0 | 1,0 | 1,0 | 1,0 | 1,0 | 1,0 | 1,0 | 1,0 | - |
| Huile minérale | 9,5 | 9,5 | 9,5 | - | 9,5 | 9,5 | 9,5 | 9,5 | 9,5 | 9,5 | - |
| Silicone | - | - | - | - | - | 1,0 | - | - | - | - | - |
| Triéthanolamine | - | - | - | - | 18,5 | 18,5 | - | - | - | 17,0 | - |
| pH | n. d. | n. d. | n. d. | 1,60 | 2,80 | 2,80 | n.d. | n.d. | 1,49 | 2,75 | 4,92 |
| **Produit d'isolation** | | | | | | | | | | | |
| **Résistance en traction (gf/g)** | | | | | | | | | | | |
| Avant vieillissement | 318 | 308 | 356 | 404 | 431 | 389 | 304 | 355 | 382 | 385 | 459 |
| Après vieillissement | 278 | 314 | 325 | 323 | 332 | 274 | 294 | 310 | 337 | 324 | 389 |
| Perte (%) | 13 | -2 | 9 | 20 | 23 | 30 | 3 | 13 | 12 | 16 | 15 |
| **Epaisseur (mm)** | | | | | | | | | | | |
| 1 heure | 81,1 | 78,8 | 77,0 | 80,8 | 79,8 | 79,6 | 83,8 | 81,1 | 80,8 | 81,6 | 78,3 |
| 24 heures | 78,4 | 75,2 | 71,1 | 76,2 | 78,1 | 78,3 | 77,2 | 75,0 | 78,4 | 78,0 | 74,0 |
| 30 jours | 78,4 | 74,1 | 71,1 | 75,0 | 76,9 | 77,4 | 75,2 | 73,1 | 68,8 | 77,3 | 72,2 |
| 90 jours | 73,6 | 74,4 | 72,4 | n. d. | n. d. | n. d. | 78,7 | 75,3 | n. d. | n. d. | 73,8 |
| **Absorption d'eau (kg/m$^3$)** | n. d. | 0,44 | 0,77 | 2,56 | 1,65 | 0,62 | 7,31 | 7,01 | n. d. | n. d. | 0,97 |
| **Résistance au feu (Euroclass A1)** | n. d. | oui | n. d. | n. d. | n. d. | n. d. | oui | n. d. | n. d. | n. d. | oui |
| $\lambda$ **(W/(m x °K)** | 0,0336 | 0,0336 | 0,0336 | 0,0332 | n. d. | 0,0344 | 0,0336 | 0,0337 | 0,0347 | 0.0345 | 0,0332 |
| **Formaldéhyde émis ($\mu$g/m$^2$h)** | n. d. | < 0,8 | n. d. | n. d. | < 0,8 | n.d. | < 0,8 | n. d. | n. d. | n. d. | 22-25 |

n.d. : non déterminé

[(2)] dextrine issue d'amidon de maïs ; masse molaire moyenne en poids : 3510 ; indice de polydispersité IP : 5,2 ; équivalent en dextrose DE : 30 ; commercialisée ROQUETTE FRERES

**Revendications**

1. Composition d'encollage pour des produits isolants à base de laine minérale, notamment de roche ou de verre, **caractérisée en ce qu'**elle comprend

   - au moins un monosaccharide et/ou au moins un polysaccharide, et
   - au moins un acide organique polycarboxylique ayant une masse molaire inférieure ou égale à 1000.

2. Composition selon la revendication 1, **caractérisée en ce que** le monosaccharide est choisi parmi les monosaccharides renfermant 3 à 8 atomes de carbone, de préférence 5 à 7.

3. Composition selon la revendication 2, **caractérisée en ce que** le monosaccharide est un aldose.

4. Composition selon la revendication 3, **caractérisée en ce que** l'aldose est un hexose tel que le glucose, le mannose et le galactose.

5. Composition selon la revendication 1, **caractérisée en ce que** le polysaccharide présente une masse molaire moyenne en poids inférieure à 1000000, de préférence inférieure à 50000, avantageusement inférieure à 10000, et mieux encore supérieure à 180

6. Composition selon la revendication 5, **caractérisée en ce que** le polysaccharide est constitué à plus de 50 % de motifs glucose.

7. Composition selon l'une des revendications 1 à 6, **caractérisée en ce qu'**elle comprend un mélange de monosaccharide(s) et/ou de polysaccharide(s), en particulier une dextrine et une mélasse.

8. Composition selon la revendication 7, **caractérisée en ce que** la dextrine présentent un équivalent en dextrose supérieur ou égal à 5, de préférence supérieur ou égal à 10, avantageusement supérieur ou égal à 15, et mieux encore inférieur à 100.

9. Composition selon la revendication 7, **caractérisée en ce que** la mélasse comprend 40 à 60 % en poids de glucides, de préférence 45 à 50 %.

10. Composition selon l'une des revendications 1 à 9, **caractérisée en ce que** l'acide organique polycarboxylique comprend au moins deux fonctions carboxyliques, de préférence au plus 4, et avantageusement au plus 3 fonctions carboxyliques.

11. Composition selon la revendication 10, **caractérisée en ce que** l'acide présente une masse molaire inférieure ou égale à 750 et de préférence inférieure ou égale à 500.

12. Composition selon l'une des revendications 1 à 11, **caractérisée en ce que** l'acide organique polycarboxylique est un acide alicyclique ramifié ou non, saturé ou insaturé, un acide cyclique ou un acide aromatique.

13. Composition selon l'une des revendications 1 à 12, **caractérisée en ce que** le monosaccharide et/ou le polysaccharide représente 10 à 90 % du poids du mélange constitué par le monosaccharide et/ou le polysaccharide et l'acide organique polycarboxylique, de préférence 20 à 85 %, et avantageusement 30 à 80 %.

14. Composition selon l'une des revendications 1 à 13, **caractérisée en ce qu'**elle comprend en outre un catalyseur choisi parmi les acides et les bases de Lewis, les composés contenant du phosphore et les composés contenant du fluor et du bore.

15. Composition selon la revendication 14, **caractérisée en ce que** le catalyseur représente jusqu'à 20 % du poids du monosaccharide et/ou du polysaccharide et de l'acide organique polycarboxylique, de préférence jusqu'à 10 % et avantageusement au moins 1 %.

16. Composition selon l'une des revendications 1 à 15, **caractérisée en ce qu'**elle comprend en outre les additifs ci-après dans les proportions suivantes calculées sur la base de 100 parts en poids de monosaccharide et/ou de polysaccharide et d'acide organique polycarboxylique :

- 0 à 2 parts de silane, en particulier un aminosilane,
- 0 à 20 parts d'huile, de préférence 4 à 15 parts,
- 0 à 30 parts d'urée et/ou de glycérol, de préférence 0 à 20 parts,
- 0 à 5 parts d'un silicone,
- 0 à 30 parts d'un « extendeur » choisi parmi les dérivés de la lignine tel que le lignosulfonate d'ammonium (LSA) ou le lignosulfonate de sodium, et les protéines animales ou végétales.

17. Produit isolant acoustique et/ou thermique à base laine minérale, notamment de verre ou de roche, encollée à l'aide de la composition d'encollage selon l'une des revendications 1 à 16.

18. Voile de fibres minérales, notamment de verre ou de roche, encollées à l'aide de la composition d'encollage selon l'une des revendications 1 à 16.

19. Procédé de fabrication d'un produit isolant acoustique et/ou thermique à base de laine minérale selon la revendication 17 ou d'un voile de fibres minérales selon la revendication 18, selon lequel on fabrique la laine minérale ou les fibres minérales, on projette sur ladite laine ou lesdites fibres une composition d'encollage et on traite ladite laine ou lesdites fibres à une température permettant la réticulation de l'encollage et la formation d'un liant infusible, **caractérisé en ce que** la composition d'encollage comprend

- au moins un monosaccharide et/ou au moins un polysaccharide, et
- au moins un acide organique polycarboxylique ayant une masse molaire inférieure à 1000.

Europäisches
Patentamt

European
Patent Office

Office européen
des brevets

# RAPPORT DE RECHERCHE EUROPEENNE

Numéro de la demande

EP 18 17 4640

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 5 895 804 A (LEE SHARON P [US] ET AL) 20 avril 1999 (1999-04-20)<br><br>* colonne 1, lignes 10-50 *<br>* colonne 1, lignes 54-62 *<br>* colonne 2, lignes 6-44 *<br>* colonne 2, lignes 45-65 *<br>* colonne 3, ligne 41 - colonne 4, ligne 15 *<br>* colonne 4, lignes 42-63 *<br>----- | 1,5,6, 10,13, 17-19 | INV.<br>C03C25/24<br>C03C25/26<br>C03C25/32<br>D04H1/64<br>C09J101/00<br>C09J103/00<br>C09J103/02<br>C09J105/00<br>C08G63/20<br>C08G63/668 |
| A,D | US 2005/215153 A1 (COSSEMENT MARC R [BE] ET AL) 29 septembre 2005 (2005-09-29)<br>* alinéas [0001] - [0007] *<br>* alinéas [0037] - [0040], [0044] - [0054] *<br>----- | 1-19 | C08K5/092<br>C08K5/151<br>C08K7/14<br>C09J167/00<br>E04B1/74<br>D04H1/645<br>D04H1/587 |
| X | EP 1 849 486 A (BMG INC [JP]) 31 octobre 2007 (2007-10-31)<br>* revendications 1,3 *<br>----- | 1,5,6, 10,11,13 | |
| X | US 6 613 378 B1 (ERHAN SELIM M [US] ET AL) 2 septembre 2003 (2003-09-02)<br>* revendications 1,2,7 *<br>----- | 1-4,10, 11,13 | DOMAINES TECHNIQUES RECHERCHES (IPC)<br><br>C03C<br>D04H<br>C09J |
| X | WO 98/02496 A (INST VOOR AGROTECH ONDERZOEK [NL]; HULLEMAN STEPHAN HENRICK DICK [NL];) 22 janvier 1998 (1998-01-22)<br>* exemples 1,3-6 *<br>----- | 1,5,6, 10,11, 13-16 | C08G<br>C08K<br>E04B |
| X | US 2 204 384 A (SALISBURY HENRY M) 11 juin 1940 (1940-06-11)<br>* exemples 4,5 *<br>----- | 1,5,6, 10,11,13 | |
| X | US 2 210 119 A (EDSON EARLE R ET AL) 6 août 1940 (1940-08-06)<br>* revendication 1 *<br>----- | 1,5,6, 10,11,13 | |
| | -/-- | | |

Le présent rapport a été établi pour toutes les revendications

| Lieu de la recherche | Date d'achèvement de la recherche | Examinateur |
|---|---|---|
| Munich | 25 septembre 2018 | Gerber, Myriam |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 18 17 4640

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2 378 378 A (BAUER HANS F) 19 juin 1945 (1945-06-19) * exemples I-III * ----- | 1,5,6, 10,11,13 | D04H1/4218 D04H1/4209 C08K3/32 C03C25/321 C03C25/146 |
| Y | WO 96/26164 A (ROCKWOOL LAPINUS BV [NL]; HUIJS MATHIJS JOHANNUS ANTHONI [NL]; CUYPERS) 29 août 1996 (1996-08-29) * revendication 8 * ----- | 1-19 | |
| Y | EP 1 382 642 A (ROCKWOOL INT [DK]) 21 janvier 2004 (2004-01-21) * revendications 1-16 * ----- | 1-19 | |
| A | US 3 340 083 A (PAUL ROBITSCHEK) 5 septembre 1967 (1967-09-05) * revendications * ----- | 1-19 | |
| X | WO 2006/120523 A1 (DYNEA AUSTRIA GMBH [AT]; PISANOVA ELENA [CA]; SCHMIDT ROBERT [CA]; TSE) 16 novembre 2006 (2006-11-16) * exemples 13, 14 * ----- | 1-19 | |
| X | WO 2007/129202 A1 (DYNEA OY [FI]; VAN HERWIJNEN HENDRIKUS [AT]; PISANOVA ELENA [CA]; TSEI) 15 novembre 2007 (2007-11-15) | 1-6,10, 11,13-19 | |
| A | * exemple 1 * ----- | 7-9,12 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 25 septembre 2018 | Gerber, Myriam |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 18 17 4640

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-09-2018

| Document brevet cité au rapport de recherche | | Date de publication | Membre(s) de la famille de brevet(s) | | Date de publication |
|---|---|---|---|---|---|
| US 5895804 | A | 20-04-1999 | AU | 751018 B2 | 08-08-2002 |
| | | | CA | 2251171 A1 | 27-04-1999 |
| | | | DE | 69822957 D1 | 13-05-2004 |
| | | | DE | 69822957 T2 | 12-08-2004 |
| | | | EP | 0911361 A1 | 28-04-1999 |
| | | | JP | 4536834 B2 | 01-09-2010 |
| | | | JP | H11199786 A | 27-07-1999 |
| | | | KR | 100561110 B1 | 01-12-2006 |
| | | | MX | 208461 B | 19-06-2002 |
| | | | NZ | 331820 A | 28-02-2000 |
| | | | US | 5895804 A | 20-04-1999 |
| US 2005215153 | A1 | 29-09-2005 | AUCUN | | |
| EP 1849486 | A | 31-10-2007 | CN | 101111272 A | 23-01-2008 |
| | | | EP | 1849486 A1 | 31-10-2007 |
| | | | JP | 4092512 B2 | 28-05-2008 |
| | | | JP | WO2006080523 A1 | 19-06-2008 |
| | | | KR | 20070104446 A | 25-10-2007 |
| | | | WO | 2006080523 A1 | 03-08-2006 |
| US 6613378 | B1 | 02-09-2003 | AUCUN | | |
| WO 9802496 | A | 22-01-1998 | ------------------------ | | |
| US 2204384 | A | 11-06-1940 | AUCUN | | |
| US 2210119 | A | 06-08-1940 | AUCUN | | |
| US 2378378 | A | 19-06-1945 | AUCUN | | |
| WO 9626164 | A | 29-08-1996 | ------------------------ | | |
| EP 1382642 | A | 21-01-2004 | AT | 319778 T | 15-03-2006 |
| | | | AU | 2003250055 A1 | 02-02-2004 |
| | | | CA | 2489817 A1 | 22-01-2004 |
| | | | CN | 1668700 A | 14-09-2005 |
| | | | DE | 60303949 T2 | 16-11-2006 |
| | | | DK | 1521807 T3 | 03-07-2006 |
| | | | EA | 200500198 A1 | 25-08-2005 |
| | | | EP | 1382642 A1 | 21-01-2004 |
| | | | EP | 1521807 A1 | 13-04-2005 |
| | | | ES | 2259148 T3 | 16-09-2006 |
| | | | HR | P20041133 A2 | 30-06-2005 |
| | | | JP | 2005533145 A | 04-11-2005 |
| | | | MY | 130481 A | 29-06-2007 |
| | | | PL | 212124 B1 | 31-08-2012 |
| | | | SI | 1521807 T1 | 31-08-2006 |

EPO FORM P0460

Pour tout renseignement concernant cette annexe : voir Journal Officiel de l'Office européen des brevets, No.12/82

page 1 de 2

**ANNEXE AU RAPPORT DE RECHERCHE EUROPEENNE
RELATIF A LA DEMANDE DE BREVET EUROPEEN NO.**
EP 18 17 4640

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-09-2018

| Document brevet cité au rapport de recherche | Date de publication | Membre(s) de la famille de brevet(s) | | Date de publication |
|---|---|---|---|---|
| | | UA | 80138 C2 | 27-08-2007 |
| | | US | 2006111480 A1 | 25-05-2006 |
| | | WO | 2004007615 A1 | 22-01-2004 |
| US 3340083 A | 05-09-1967 | BE | 647510 A | 31-08-1964 |
| | | DE | 1469442 A1 | 19-12-1968 |
| | | DK | 109756 C | 24-06-1968 |
| | | FI | 43496 B | 31-12-1970 |
| | | GB | 1026993 A | 20-04-1966 |
| | | LU | 46029 A1 | 01-01-1972 |
| | | NL | 128220 C | 25-09-2018 |
| | | NL | 6405074 A | 09-11-1964 |
| | | SE | 327552 B | 24-08-1970 |
| | | US | 3340083 A | 05-09-1967 |
| WO 2006120523 A1 | 16-11-2006 | AR | 054112 A1 | 06-06-2007 |
| | | BR | PI0611449 A2 | 08-09-2010 |
| | | CA | 2607611 A1 | 16-11-2006 |
| | | CN | 101203555 A | 18-06-2008 |
| | | DK | 1885785 T3 | 22-09-2014 |
| | | EP | 1885785 A1 | 13-02-2008 |
| | | ES | 2523855 T3 | 02-12-2014 |
| | | HR | P20141042 T1 | 19-12-2014 |
| | | JP | 2008542451 A | 27-11-2008 |
| | | MY | 149857 A | 31-10-2013 |
| | | SI | 1885785 T1 | 31-12-2014 |
| | | TW | I393740 B | 21-04-2013 |
| | | UA | 90901 C2 | 10-06-2010 |
| | | US | 2006252855 A1 | 09-11-2006 |
| | | WO | 2006120523 A1 | 16-11-2006 |
| WO 2007129202 A1 | 15-11-2007 | EP | 2016122 A1 | 21-01-2009 |
| | | US | 2007270066 A1 | 22-11-2007 |
| | | WO | 2007129202 A1 | 15-11-2007 |

EPO FORM P0460

Pour tout renseignement concernant cette annexe : voir Journal Officiel de l'Office européen des brevets, No.12/82

page 2 de 2

**EP 3 415 475 A1**

## RÉFÉRENCES CITÉES DANS LA DESCRIPTION

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A

- US 6146746 A
- US 6299936 B
- US 20020091185 A
- US 20020188055 A
- US 20040002567 A
- US 20050215153 A
- US 5895804 A
- WO 0196254 A1